# EUROPÄISCHE PATENTSCHRIFT

(11) **EP 3 110 566 B1**
(45) Veröffentlichungstag und Bekanntmachung des Hinweises auf die Patenterteilung: **31.07.2019**
(21) Anmeldenummer: 15706813.1
(22) Anmeldetag: 27.02.2015
(51) Int. Cl.: B05D 7/00, B05D 7/14, B05D 1/18, C09D 5/08, B05D 3/02, C09D 133/08, C09D 163/00, C09D 175/04, C23F 11/173

(54) **VERFAHREN ZUM BESCHICHTEN VON METALLISCHEN OBERFLÄCHEN VON SUBSTRATEN UND NACH DIESEM VERFAHREN BESCHICHTETEN GEGENSTÄNDE**
PROCESS FOR COATING METALLIC SURFACES OF SUBSTRATES AND ARTICLES COATED BY THIS PROCESS
PROCÉDÉ DE REVÊTEMENT DE SURFACES MÉTALLIQUES DE SUBSTRATS ET OBJETS REVÊTUS SELON CE PROCÉDÉ

(30) Priorität: 27.02.2014 DE 102014203515
(43) Veröffentlichungstag der Anmeldung: 04.01.2017
(73) Patentinhaber: Chemetall GmbH, 60487 Frankfurt am Main (DE)
(72) Erfinder: BREMSER, Wolfgang, 33100 Paderborn (DE); DROLL, Martin, 33189 Schlangen (DE); SEEWALD, Oliver, 34431 Marsberg (DE); NIESEN-WARKENTIN, Evgenija, 59494 Soest (DE); SCHACHTSIEK, Lars, 33100 Paderborn (DE); TRAUT, Manuel, 59069 Hamm (DE); SCHWAMB, Michael, 60325 Frankfurt (DE); WASSERFALLEN, Daniel, 55128 Mainz (DE); SOTKE, Vera, 65824 Schwalbach am Taunus (DE); FRENKEL, Aliaksandr, 63067 Offenbach (DE); EILINGHOFF, Ron, 60487 Frankfurt (DE); GEROLD, Stephanie, 33102 Paderborn (DE); KHELFALLAH, Nawel, 60489 Frankfurt (DE)
(74) Vertreter: BASF IP Association
(86) Internationale Anmeldenummer: PCT/EP2015/054105
(87) Internationale Veröffentlichungsnummer: WO 2015/128449

(56) Entgegenhaltungen:
- EP-A1- 0 616 720
- DE-A1-102011 053 509
- DE-A1-102013 201 966
- DE-A1-102014 213 873

## Beschreibung

Die Erfindung betrifft ein Verfahren zur Beschichtung von metallischen Oberflächen. Es existieren zahlreiche Methoden, um auf metallischen Oberflächen mittels Tauchverfahren homogene Beschichtungen zu erzeugen. Hierbei benutzt man für die Erzeugung von insbesondere Korrosionschutzbeschichtungen vorwiegend bestehend aus einer organischen Matrix sowie organischen und/oder anorganischen Zusatzkomponenten vorzugsweise folgende Techniken.

Die klassischen Verfahren beruhen auf der Nutzung der rheologischen Eigenschaften der verwendeten Formulierungen, um eine vollständige Beschichtung eines gefügten Werkstückes zu erzielen. Obwohl durch kontinuierliches Rotieren des betreffenden Werkstückes nach dem Tauchvorgang eine Ansammlung von Beschichtungsmaterial an kritischen Stellen reduziert werden kann, ist es mit dieser Methode nicht möglich eine vollständig homogene Beschichtung zu erzielen. Zusätzlich können bei Stellen mit höheren Beschichtungsanteilen während des Trocknungs- und/oder Vernetzungsvorgangs Fehlstellen wie Blasenbildung und Kocher entstehen, die die Qualität der gesamten Beschichtung beeinträchtigen.

Die elektrophoretischen Verfahren vermeiden diese Problematik, indem elektrischer Strom eingesetzt wird, um eine gleichmäßige Beschichtung im Tauchen abzuscheiden. Mit dieser Methode gelingt die Erzeugung von weitgehend homogenen Beschichtungen auf metallischen Werkstücken. Die abgeschiedenen Beschichtungen zeigen eine ausgesprochen gute Haftung im nassen Zustand zum metallischen Untergrund, wodurch ohne Ablösung der Beschichtung das Werkstück in einem nachfolgenden Spülschritt behandelt werden kann. Dies führt dazu, dass die vorab genannten schwer zugänglichen Stellen am Werkstück von überstehender Lackierlösung befreit werden und somit keine Fehlstellen während des Trocknungsvorgangs entstehen können. Diese Technik hat den Nachteil, dass neben der notwendigen Menge an elektrischer Energie und neben geeigneten Tauchbecken, die zu einer Erhöhung der Kosten führen, auch sogenannte Kantenfluchten auftreten, da elektrostatische Felder an makroskopischen Kanten inhomogen aufgebaut werden und die Kanten ungleichmäßig und eventuell auch unvollständig beschichtet werden. Bei dem Aufbau der Werkstücke müssen zudem Hohlräume vermieden werden, da an diesen Stellen ein Effekt vergleichbar mit dem Phänomen des Faraday'schen Käfigs auftritt. Aufgrund der Reduktion der zum Abscheiden notwendigen elektrischen Feldstärken kann an solchen Bereichen am Werkstück keine oder nur eine stark verringerte Beschichtung durch das Verfahren aufgebracht werden (Umgriffsproblematik), was zu einer Beeinträchtigung der Beschichtungsqualität führt. Zusätzlich weist diese Technik bei einer elektrischen Tauchlackierung (ETL) wie z.B. bei der kathodischen Tauchlackierung (KTL) die folgenden Nachteile auf: Ein entsprechendes Tauchbad ist zusammen mit allen elektrischen und mechanischen Einrichtungen von der Temperaturführung, Stromversorgung und elektrischen Isolierung, Umwälzeinrichtung und Zugabeeinrichtung bis zur Entsorgung der Anolyt-Säure, die bei der elektrolytischen Beschichtung entsteht, und mit einer Ultrafiltration zur Lackrezyklierung sowie Steuereinrichtungen sehr aufwendig aufgebaut. Die Prozessführung erfordert einen sehr hohen technischen Aufwand auch aufgrund der großen Stromstärken und Energiemengen sowie bei der Vergleichmäßigung der elektrischen Parameter über das Badvolumen und bei der präzisen Einstellung aller Prozessparameter sowie bei der Wartung und Säuberung der Anlage.

Die bekannten autophoretischen Verfahren beruhen auf einem stromlosen Konzept bestehend aus einem Beizangriff auf die eingesetzte Substratoberfläche, bei der Metallionen aus der Oberfläche herausgelöst werden und aufgrund der Konzentration an metallischen Ionen an der entstehenden Grenzfläche eine Emulsion koaguliert. Obwohl diese Verfahren nicht oben genannter Einschränkung der elektrolytischen Verfahren bezüglich dem Faraday'schen Käfigeffektes aufweisen, müssen die bei dem Prozess entstandenen Beschichtungen nach dem ersten Aktivierungsschritt in einem aufwendigen mehrstufigen Tauchverfahren fixiert werden. Desweiteren führt der Beizangriff zu einer unvermeidbaren Verunreinigung der aktiven Zone durch Metallionen, die aus den Zonen entfernt werden müssen. Zudem beruht die Methode auf einem chemischen Abscheidungsprozess, der nicht selbstregulierend ist und bei Bedarf nicht abgebrochen werden kann, wie z. B. durch das Ausschalten des elektrischen Stromes bei den elektrolytischen Verfahren. Somit ist bei einer längeren Verweildauer der metallischen Substrate in den aktiven Zonen die Ausbildung einer zu hohen Schichtstärke unvermeidbar.

Es ist ein lange verfolgter Wunsch, homogene Beschichtungen in einem Tauchprozess effizient und kostengünstig auszubilden, um hieraus möglichst geschlossene und im Wesentlichen ebene Beschichtungen in größerer Dicke herzustellen.

Aus dem Dokument DE 102014213873 A1 ist ein Verfahren zum Beschichten von Substraten und nach diesem Verfahren beschichteten Gegenstände bekannt, bei dem gereinigte Oberflächen von Substraten mit einer wässerigen Zusammensetzung in Form Dispersion oder/und Suspension kontaktiert und beschichtet werden und nach dem Trocknen der organischen Beschichtung ein Beschichten mit einer gleichartigen oder weiteren Beschichtungszusammensetzung vor einem Trocknen oder/und Einbrennen erfolgen kann. Das wesentliche Merkmal dieses Verfahrens besteht darin, dass vor der Beschichtung mit einer wässerigen Zusammensetzung in Form einer Dispersion oder/und Suspension das Substrat mit einem mehrwertige Metallkationen einlagendernden, kolloidalen silikatischen Sol oder einem silan- oder silikatmodifizierten Polymer überzogen wird. Ein ähnliches Verfahren ist auch aus der DE 102013201966 A1 bekannt.

Die Erfindung betrifft ein Verfahren zum Beschichten von metallischen Oberflächen von Substraten mit wässerigen Zusammensetzungen, im weiteren auch Beschichtungszusammensetzungen genannt, in Form einer Dispersion und/oder Suspension, die mindestens ein stabilisiertes Bindemittel und einen Gelbildner enthalten und mit den in einer Vorbehandlungsstufe und/oder während der Kontaktierung aus der metallischen Oberfläche herausgelöste Kationen eine Beschichtung auf Basis eines ionogenen Gels bildet, bei dem die Beschichtung erfolgt durch:
I. Bereitstellen eines Substrats mit einer gereinigten, metallischen Oberfläche,
II. Kontaktieren und Beschichten der metallischen Oberfläche mit einer ersten wässerigen Zusammensetzung in Form Dispersion und/oder Suspension,
III. gegebenenfalls Spülen der organischen Beschichtung,
IV. gegebenenfalls Trocknen der organischen Beschichtung und
V. Beschichten mit mindestens zwei weiteren Beschichtungszusammensetzungen vor dem Trocknen und Vernetzen aller aufgebrachten Schichten, wobei die stabilisierten Bindemittel die Bedingung erfüllen müssen, dass
   a) ein wässriges Gemisch aus vollentsalztem Wasser, 0,2 bis 2 Gew.-% des Gelbildners und 5 bis 20 Gew.-% des stabilisierten Bindemittels;
   b) auf einen pH-Wert von 1 bis 7 eingestellt;
   c) ein gereinigtes Substrat in das Gemisch gemäß b) für mindestens 1 Minuten bei Raumtemperatur getaucht und
   d) geprüft wird, ob eine Abscheidung einer organischen Beschichtung von mindestens 1 µm erfolgt ist, wobei
   e) eine zusätzlich eine Prüfung ohne Gelbildner durchgeführt wird, in dem man ein Gemisch aus vollentsalztem Wasser und 5 bis 20 Gew.-% der zu untersuchenden Dispersion herstellt;
   f) das unter e) hergestellte Gemisch gleichfalls auf einen pH-Wert von 1 bis 7 eingestellt und
   g) die unter c) und d) beschriebene Prüfung wiederholt.

Überraschenderweise wurde gefunden, dass die Substrate mit metallischen Oberflächen bei der Behandlung mit der wässerigen Zusammensetzung eines erfindungsgemäß ausgewählten stabilisierten Bindemittels und Gelbildners mit den während der Kontaktierung aus der metallischen Oberfläche herausgelösten Kationen eine Beschichtung auf Basis eines ionogenen Gels bilden und dass die auf dem Substrat abgeschiedene ionogene Gelschicht das Hindurchdiffundieren weiterer aus der metallischen Oberfläche herausgelöster Kationen gestattet, so dass die Beschichtung mit weiteren erfindungsgemäßen Beschichtungszusammensetzungen in weiteren Beschichtungsbädern/stufen erfolgen kann.

Vorzugsweise werden stabilisierte Bindemittel ausgewählt, die die Bedingung erfüllen, dass
a) ein wässriges Gemisch aus vollentsalztem Wasser, 0,3 bis 1 Gew.-% des Gelbildners und 7 bis 15 Gew.-% des stabilisierten Bindemittels;
b) mit Hilfe einer Mineralsäure auf einen pH-Wert von 1,5 bis 5 eingestellt;
c) ein gereinigtes Substrat für 2 bis 15 Minuten bei Raumtemperatur in das Gemisch gemäß b) getaucht und
d) geprüft wird, ob eine Abscheidung einer organischen Beschichtung von mindestens 2 µm erfolgt ist, wobei
e) eine zusätzlich eine Prüfung ohne Gelbildner durchgeführt wird, in dem man ein Gemisch aus vollentsalztem Wasser und 7 bis 15 Gew.-% der zu untersuchenden Dispersion herstellt;
f) das unter e) hergestellte Gemisch gleichfalls mittels Mineralsäure auf einen pH-Wert von 1,5 bis 5 eingestellt und
g) die unter c) und d) beschriebene Prüfung wiederholt.

Die stabilisierten Bindemittel sind besonders bevorzugt ausgewählt aus der Gruppe bestehend aus: nichtionisch stabilisierten Polyepoxy-Dispersionen, nichtionisch stabilisierten Polyurethan-Dispersionen und ionisch stabilisierte Polyacrylat-Dispersionen.

Vorzugsweise enthalten die wässerigen Zusammensetzungen stabilisierte Dispersionen mit einen Feststoffgehalt von 20 bis 90 Gew.-%, eine Viskosität von 100 bis 5000 mPas, eine Dichte von 1,0 bis 1,2 g/cm³ und einen pH-Wert im Bereich von 0,5 bis 10 in einer Menge von 0,01 bis 80,0 Gew.-% bezogen auf die gesamte Masse des resultierenden Gemisches und mindestens einen Gelbildner in einer Menge von 0,001 bis 20,0 Gew.-% bezogen auf die gesamte Masse des resultierenden Gemisches.

Besonders bevorzugt enthalten die wässerigen Zusammensetzungen weiterhin einen oder mehrere Vertreter ausgewählt aus den nachfolgenden Gruppen:
a) einen Vernetzer ausgewählt aus der Gruppe besteht aus Silanen, Siloxanen, Phenolharztypen oder Aminen in einer Menge von 0,01 g/L bis 50 g/L,
b) komplexe Titan- und /oder Zirkonfluoride in einer Menge von 0,01 g/L bis 50 g/L,
c) einen Gehalt an mindestens einem Entschäumer und
d) mindestens ein Additiv ausgewählt aus der Gruppe bestehend aus Pigmenten, Bioziden, Dispergierhilfsmitteln, Filmbildungshilfmitteln, Hilfsmittel zum Einstellen des pH-Werts, Verdicker und Verlaufsmittel.

Vorzugsweise enthält oder besteht der Gelbildner ausgewählt aus: a) mindestens ein Polysaccharid auf Basis von Glykogenen, Amylosen, Amylopektinen, Callosen, Agar, Alginen, Alginaten, Pektinen, Carrageenen, Cellulosen, Chitinen, Chitosanen, Curdlanen, Dextranen, Fruktanen, Kollagenen, Gellan Gum, Gummi Arabicum, Stärken, Xanthanen, Traganth, Karayanen, Tarakernmehlen und Glucomannanen; b) mindestens ein anionischen Polyelektrolyten natürlichen Ursprungs auf Basis von Polyaminosäuren, Kollagenen, Polypeptiden, Ligninen oder c) mindestens einen synthetischen anionischen Polyelektrolyten auf Basis von Polyaminosäuren, Polyacrylsäuren, Polyacrylsäuren-Copolymere, Acrylamid-Copolymere, Ligninen, Polyvinylsulfonsäure, Polycarbonsäuren, Polyphosphorsäuren oder Polystyrolen.

Besonders bevorzugt enthalten die wässerigen Zusammensetzungen und die hieraus hergestellten organische Beschichtungen mindestens ein anionisches Polysaccharid ausgewählt aus solchen mit einem Veresterungsgrad der Carboxyfunktion im Bereich von 5 bis 75 % bezogen auf die Gesamtzahl der Alkohol- und Carboxygruppen.

Ganz besonders bevorzugt enthalten die wässerigen Zusammensetzungen und die hieraus hergestellten organischen Beschichtungen mindestens ein anionisches Polysaccharid oder mindestens einen anionischen Polyelektrolyten ausgewählt aus solchen mit einem Molekulargewicht im Bereich von 500 bis 1000000 g/mol⁻¹.

Die wässerigen Zusammensetzungen und die hieraus hergestellten organischen Beschichtungen enthalten mindestens ein anionisches Polysaccharid oder mindestens einen anionischen Polyelektrolyten ausgewählt aus solchen mit einem Amidierungsgrad der Carboxyfunktionen im Bereich von 1 bis 50 % oder einem Epoxidierungsgrad der Carboxyfunktionen von bis zu 80 %.

Vorzugsweise sind die anionischen Polyelektrolyte modifiziert mit Haftgruppen ausgewählt aus der Gruppe bestehend aus chemischen Gruppen von multifunktionalen Epoxiden, Isocyanaten, primären Aminen, sekundären Aminen, tertiären Aminen, quartären Aminen, Amiden, Imiden, Imidazolen, Formamiden, Michael-Reaktionsprodukten, Carbodiimiden, Carbenen, cyclischen Carbenen, Cyclocarbonaten, multifunktionalen Carbonsäuren, Aminosäuren, Nukleinsäuren, Methacrylamiden, Polyacrylsäuren, Polyacrylsäurederivaten, Polyvinylalkoholen, Polyphenolen, Polyolen mit mindestens einem Alkyl- und/oder Arylrest, Caprolactam, Phosphorsäuren, Phosphorsäureestern, Epoxidestern, Sulfonsäuren, Sulfonsäureestern, Vinylsulfonsäuren, Vinylphosphonsäuren, Katechol, Silanen sowie den hieraus gebildeten Silanolen und/oder Siloxanen, Triazinen, Thiazolen, Thiazinen, Dithiazinen, Acetalen, Halbacetalen, Chinonen, gesättigten Fettsäuren, ungesättigten Fettsäuren, Alkyden, Estern, Polyestern, Ethern, Glykolen, cyclischen Ethern, Kronenethern, Anhydriden, sowie von Acetylacetonen und von beta-Diketo-Gruppen, Carbonylgruppen und Hydroxy-Gruppen.

Besonders bevorzugt weisen die wässerigen Zusammensetzungen und die hieraus hergestellten organischen Beschichtungen einen Gehalt an mindestens einem Komplexbildner für Metallkationen oder einem Polymer, welches Metallkationen komplexierend modifiziert ist, auf.

Ganz besonders bevorzugt weisen die wässerigen Zusammensetzungen und die hieraus hergestellten organischen Beschichtungen einen Gehalt an mindestens einem Komplexbildner ausgewählt aus solchen auf Basis von Maleinsäure, Alendronsäure, Itaconsäure, Citraconsäure oder Mesaconsäure oder die Anhydride oder Halbester dieser Carbonsäuren auf.

Die wässerigen Zusammensetzungen und die hieraus hergestellten organischen Beschichtungen enthalten mindestens eine Art von Kationen, ausgewählt aus solchen auf Basis von kationisch wirkenden Salzen ausgewählt aus der Gruppe bestehend aus Melaminsalzen, Nitrososalzen, Oxoniumsalzen, Ammoniumsalzen, Salzen mit quaternären Stickstoffkationen, Salzen von Ammoniumderivaten und Metallsalzen von Ag, Al, Ba, Ca, Co, Cu, Fe, In, Mg, Mn, Mo, Ni, Pb, Sn, Ta, Ti, V, W, Zn und/oder Zr.

Vorzugsweise enthalten die wässerigen Zusammensetzungen ein Vernetzer ausgewählt aus der Gruppe bestehend aus: Silanen, Siloxanen, Phenolharztypen oder Aminen in einer Menge von 0,01 g/L bis 50 g/L.

Besonders bevorzugt enthalten die wässerigen Zusammensetzungen komplexe Titan- und/oder Zirkonfluoride in einer Menge von 0,01 g/L bis 50 g/L.

Besonders bevorzugt enthalten die wässerigen Zusammensetzungen komplexe Titan- und/oder Zirkonfluoride in einer Menge von 0,1 g/L bis 30 g/L.

Die wässerigen Zusammensetzungen weisen einen Gehalt an mindestens einem Entschäumer auf.

Die wässerigen Zusammensetzungen können weiterhin mindestens ein Additiv ausgewählt aus der Gruppe bestehend aus: Pigmenten, Bioziden, Dispergierhilfsmitteln, Filmbildungshilfmitteln, Hilfsmittel zum Einstellen des pH-Werts, Verdicker und Verlaufsmittel enthalten.

Vorzugsweise werden vor dem Kontaktieren und Beschichten der metallischen Oberflächen mit einer wässerigen Zusammensetzung in Verfahrensstufe II. die metallischen Oberflächen gereinigt, gebeizt oder vorbehandelt.

Vorzugsweise bildet im erfindungsgemäßen Verfahren jede der wässerigen Zusammensetzungen eine Beschichtung auf Basis eines ionogenen Gels aus, wobei die Schichtstärke aller abgeschiedenen Beschichtungen nach dem Trocknen und Vernetzen aller aufgebrachten Schichten im Bereich von 3 bis 500 µm, vorzugsweise von 5 bis 300 µm und besonders bevorzugt 8 bis 100 µm liegt und 2 bis 10, vorzugweise 3 bis 5 Schichten abgeschieden werden.

Die einzelnen organischen Beschichtungen werden in 0,05 bis 20 Minuten im Tauchbad ausgebildet und weisen nach dem Trocknen jeweils eine Trockenfilmdicke im Bereich von 1 bis 100 µm, vorzugsweise von 3 bis 60 µm und besonders bevorzugt 5 bis 30 µm auf.

Beschrieben sind auch wässerige Zusammensetzungen zur Verwendung in dem erfindungsgemäßen Verfahren bestehend jeweils aus einem Gemisch mindestens einer stabilisierten Dispersion mit einem Feststoffgehalt von 30 bis 90 Gew.-%, einer Viskosität von 100 bis 5000 mPas und einer Dichte von 1,0 bis 1,2 g/cm³ in einer Menge von 0,01 bis 80,0 Gew.-% bezogen auf die gesamte Masse des resultierenden Gemisches mit einem Gelbildner in einer Menge von 0,001 bis 20,0 Gew.-% bezogen auf die gesamte Masse des resultierenden Gemisches, wobei die wässerigen Zusammensetzungen einen pH-Wert im Bereich von 1 bis 7 aufweisen.

Vorzugsweise enthalten die wässerigen Zusammensetzungen weiterhin einen oder mehrere Vertreter ausgewählt aus den nachfolgenden Gruppen:
a) einen Vernetzer ausgewählt aus der Gruppe besteht aus Silanen, Siloxanen, Phenolharztypen oder Aminen in einer Menge von 0,01 g/L bis 50 g/L,
b) komplexe Titan- und /oder Zirkonfluoride in einer Menge von 0,01 g/L bis 50 g/L,
c) einen Gehalt an mindestens einem Entschäumer und
d) mindestens ein Additiv ausgewählt aus der Gruppe bestehend aus Pigmenten, Bioziden, Dispergierhilfsmitteln, Filmbildungshilfmitteln, Hilfsmittel zum Einstellen des pH-Werts, Verdicker und Verlaufsmittel.

Die erfindungsgemäße Beschichtung kann vorzugsweise eingesetzt werden für beschichteten Substrate als Draht, Drahtgeflecht, Band, Blech, Profil, Verkleidung, Teil eines Fahrzeugs oder Flugkörpers, Element für ein Haushaltsgerät, Element im Bauwesen, Gestell, Leitplanken-, Heizkörper- oder Zaunelement, Formteil komplizierter Geometrie oder Kleinteil wie z.B. Schraube, Mutter, Flansch oder Feder. Besonders bevorzugt wird sie im Automobilbau, im Bauwesen, für den Gerätebau, für Haushaltsgeräte oder im Heizungsbau eingesetzt. Die Verwendung des erfindungsgemäßen Verfahrens ist besonders bevorzugt zur Beschichtung von Substraten, die Probleme bei der Beschichtung mit einem Elektrotauchlack bereiten.

Nachfolgend wird die Erfindung an Hand von Beispielen näher beschrieben, ohne dass dadurch die allgemeine Lehre gemäß Anspruch1 der Erfindung eingeschränkt werden soll.

### Beispiele

Vorangestellt ist eine allgemeine Beschreibung der eingesetzten Materialien und der Durchführung des Verfahrens.

### A. Substrate:

1: Elektrolytisch verzinktes Stahlblech mit einer Zink-Schichtauflage von 5µm, Blechdicke 0,81 mm,
2: Kaltgewalzter Stahl, Blechdicke ca. 0,8 mm,
3: Aluminiumlegierung der Güteklasse AC 170, Blechdicke ca. 1,0 mm

### B. Alkalische Reinigung:

1: 30 g/L Gardoclean® S 5176 und 4 g/L Gardobond® Additiv H 7406 der Chemetall GmbH in Stadtwasser angesetzt. Die Bleche wurden 180 s im Spritzebad bei 60 °C gereinigt und anschließend 120 s mit Stadtwasser und 120 s mit deionisiertem Wasser im Tauchbad gespült.

### C. Vorbehandlung:

1: Vorbehandlung auf Zinkphosphat-Basis (Gardobond 26S der Firma Chemetall GmbH)
2: Vorbehandlung auf Silanbasis (Oxsilan 9810/2 der Firma Chemetall GmbH)

Beschichtung der Oberflächen mit erfindungsgemäßen Formulierungen für die Ausbildung der organischen Beschichtung:
Alle Mischungen wurden mittels Tauchbad bei Raumtemperatur innerhalb von 5 Minuten auf das jeweilige Substrat appliziert.

### D. Bestandteile der Formulierungen

Alle Angaben in der untenstehenden Tabelle bezeichnen den prozentualen Gewichtsanteil in Lieferform der jeweiligen Komponenten. Der prozentuale Anteil des enthaltenen vollentsalzten Wasser entspricht der Differenz aus der Summe der in der Tabelle angegebenen Gehalte zu 100 Gewichtsprozenten.

### a) eingesetzte Bindemittel (Polymer-Dispersionen/Suspensionen)

### 1: Dispersion A

Nichtionisch stabilisierte Polyepoxy-Dispersion mit einem Festkörpergehalt von 45-49%, einem pH-Wert von 5,0-6,0, einer Viskosität von 1000-2000 mPas, einem Epoxy-Equivalent von 2300-2800 und einer Dichte von 1,1 g/cm³.

### 2: Dispersion B

Nichtionisch stabilisierte Polyurethan-Dispersion mit einem Festkörpergehalt von 30%, einem pH-wert von 3,0-6,0, einer Viskosität von 300 - 2000 mPas und einer Dichte von 1,1 g/cm³.

### 3: Dispersion C

Ionisch stabilisierte Polyacrylat-Dispersion mit einem Festkörpergehalt von 50 %, einem pH-Wert von 7,5-8,5, einer Viskosität von 200 mPas, einer Dichte von 1,05 g/cm³.

### b) eingesetzte Gelbildner

### 1: Gelbildner A

Als Gelbildner wurde ein 1:1-Gemisch von einem Polysaccharid mit einem Molekulargewicht von ungefähr 70'000 g/mol, einem Amidierungsgrad von 11%, einem Veresterungsgrad von 10%, einem Epoxydierungsgrad von 0%, einem Galakturonsäuregehalt von 88% und einem Polysaccharid mit einem Molekulargewicht von ungefähr 70'000 g/mol, einem Amidierungsgrad von 0%, einem Veresterungsgrad von 38%, einem Epoxydierungsgrad von 0%, einem Galakturonsäuregehalt von 85% verwendet. Zur Erstellung der Formulierung verwendete man eine 2 %ige wässrige Lösung des Polysaccharids.

### 2: Gelbildner B

Als Gelbildner wurde ein Polysaccharid mit einem Molekulargewicht von von ungefähr 70'000 g/mol, einem Amidierungsgrad von 0%, einem Veresterungsgrad von 15%, einem Epoxydierungsgrad von 0%, einem Galakturonsäuregehalt von 85% verwendet. Zur Erstellung der Formulierung verwendete man eine 2 %ige wässrige Lösung des Polysaccharids.

### c) Pigmente

1: Gasruss-RCC-Pigmentpaste auf Basis eines Dispergierharzes für Anwendungen in wässrigen Beschichtungssystemen mit pH-Werten im sauren Bereich mit einem Pigment-Gehalt von 4%, einem Füllstoffgehalt von 50 %, einem Gehalt an 10 % an Dispergieradditiven mit einem resultierenden Festkörpergehalt von ca. 60%
2: Mikronisiertes Weißpigment auf Basis eines Titandioxid-Rutils, anorganisch und organisch beschichtet
3: Eisenoxidrot, deckend, in wässriger Dispersion mit Colour Index Pigment Red 101 / 77 491 mit einem pH Wert von 7-10 und einer Dichte von 1,7 bis 1,9 g / cm³
4: Cu-Phthalocyanin, alpha, in wässriger Dispersion, einem Colour Index von Pigment Blue 15:2 / 74 160 mit einem pH Wert von 7-10 und einer Dichte von 1,1 bis 1,3
5: Chinophthalongelb, gut fließende Paste mit einem Colour Index von Pigment Yellow 138 / 56 300 einem pH Wert von 7-10 und einer Dichte von 1,3-1,4

### d) Additive

1: Fluoridhaltige wässrige Vorbehandlungslösungen - kamen nicht zum Einsatz, wenn Substrate mit Vorbehandlungen (s. Punkt II) zum Einsatz kamen. Diente vorzugsweise zum Abscheiden auf Aluminiumsubsstraten
2: Phosphorsäure als wässrige Lösung (20%)
3: Entschäumer auf Basis von Naturölen, Emulgatoren und einem Gehalt von 1 Gew.-% der Lieferform in Wasser. Die Tabellenangaben beziehen sich auf die Menge der Lösung pro Liter Formulierung.

Additive kamen vorzugsweise zur Anwendung, wenn die Formulierungen im pH-Wert angepasst werden mussten oder sich Schaum bildete.

### Übersicht der beispielhaft verwendeten Formulierungen

**Tabelle 1: Formulierungsbeispiele zur erfindungsgemässen Beschichtung und Beschichtungsabfolge**

| Nr. | Bindemittel | | | Gelbildner | | Pigment | | | | | pH |
|---|---|---|---|---|---|---|---|---|---|---|---|
| | 1 | 2 | 3 | 1 | 2 | 1 | 2 | 3 | 4 | 5 | |
| | | | | | | | | | | | |
| 1 | 43,0 | | | 25,0 | | 7,0 | | | | | 5,0 |
| 2 | | 67,0 | | 25,0 | | 7,0 | | | | | 5,5 |
| 3 | | | 40,0 | 25,0 | | 7,0 | | | | | 6,5 |
| 4 | 43,0 | | | | 25,0 | 7,0 | | | | | 4,0 |
| 5 | | 67,0 | | | 25,0 | 7,0 | | | | | 4,5 |
| 6 | | | 40,0 | | 25,0 | 7,0 | | | | | 5,5 |
| 7 | 14,3 | 22,3 | 13,3 | 25,0 | | 7,0 | | | | | 5,5 |
| 8 | 14,3 | 22,3 | 13,3 | | 25,0 | 7,0 | | | | | 4,5 |
| 9 | 43,0 | | | 25,0 | | | 5,0 | | | | 5,5 |
| 10 | | 67,0 | | 25,0 | | | 5,0 | | | | 6,0 |
| 11 | | | 40,0 | 25,0 | | | 5,0 | | | | 6,5 |
| 12 | 43,0 | | | | 25,0 | | 5,0 | | | | 5,0 |
| 13 | | 67,0 | | | 25,0 | | 5,0 | | | | 5,5 |
| 14 | | | 40,0 | | 25,0 | | 5,0 | | | | 6,0 |
| 15 | 14,3 | 22,3 | 13,3 | 25,0 | | | 5,0 | | | | 6,0 |
| 16 | 14,3 | 22,3 | 13,3 | | 25,0 | | 5,0 | | | | 6,0 |
| 17 | 43,0 | | | 25,0 | | | | 1,0 | | | 5,2 |
| 18 | | 67,0 | | 25,0 | | | | 1,0 | | | 5,7 |
| 19 | | | 40,0 | 25,0 | | | | 1,0 | | | 6,7 |
| 20 | 43,0 | | | | 25,0 | | | 1,0 | | | 4,2 |
| 21 | | 67,0 | | | 25,0 | | | 1,0 | | | 4,7 |
| 22 | | | 40,0 | | 25,0 | | | 1,0 | | | 5,7 |
| 23 | 14,3 | 22,3 | 13,3 | 25,0 | | | | 1,0 | | | 5,7 |
| 24 | 14,3 | 22,3 | 13,3 | | 25,0 | | | 1,0 | | | 4,7 |
| 25 | 43,0 | | | 25,0 | | | | | 2,0 | | 5,2 |
| 26 | | 67,0 | | 25,0 | | | | | 2,0 | | 5,7 |
| 27 | | | 40,0 | 25,0 | | | | | 2,0 | | 6,7 |
| 28 | 43,0 | | | | 25,0 | | | | 2,0 | | 4,2 |
| 29 | | 67,0 | | | 25,0 | | | | 2,0 | | 4,7 |
| 30 | | | 40,0 | | 25,0 | | | | 2,0 | | 5,7 |
| 31 | 14,3 | 22,3 | 13,3 | 25,0 | | | | | 2,0 | | 5,7 |
| 32 | 14,3 | 22,3 | 13,3 | | 25,0 | | | | 2,0 | | 4,7 |
| 33 | 43,0 | | | 25,0 | | | | | | 3,0 | 5,2 |
| 34 | | 67,0 | | 25,0 | | | | | | 3,0 | 5,7 |
| 35 | | | 40,0 | 25,0 | | | | | | 3,0 | 6,7 |
| 36 | 43,0 | | | | 25,0 | | | | | 3,0 | 4,2 |
| 37 | | 67,0 | | | 25,0 | | | | | 3,0 | 4,7 |
| 38 | | | 40,0 | | 25,0 | | | | | 3,0 | 5,7 |
| 39 | 14,3 | 22,3 | 13,3 | 25,0 | | | | | | 3,0 | 5,7 |
| 40 | 14,3 | 22,3 | 13,3 | | 25,0 | | | | | 3,0 | 4,7 |

### E: Spülen der organischen Beschichtung:

Das Spülen nach der organischen Beschichtung dient dazu, um nicht haftende Bestandteile der Formulierung und Anhäufungen der Formulierung zu entfernen und den Verfahrensgang, wie für industrielle Anwendungen üblich, so realitätsnah wie möglich zu gestalten.

### F: Trocknen und Vernetzen der Beschichtung:

Trocknung oder Trocknung unter Verfilmung, wobei unter Verfilmung im Sinne der vorliegenden Erfindung auch Einbrennen oder Vernetzen der Beschichtung verstanden wird, insbesondere der organischen polymeren Bestandteile:
1: 200 °C für 20 Minuten

### Beispiele zur Beschichtungsabfolge

Exemplarisch sollen hier ohne Beschränkung auf diese Beispiele folgende Beschichtungsabfolgen auf dem Substrat 2 angeführt werden:

### Beispiel 1

Stufe I
Stufe II für 120 s mit Formulierung Nr. 9 (15 µm Trockenfilmstärke)
Stufe III für 15 s
Stufe II für 60 s mit Formulierung Nr. 1 (5 µm Trockenfilmstärke)
Stufe III für 15 s
Stufe II für 80 s mit Formulierung Nr. 10 (10 µm Trockenfilmstärke)
Stufe III für 15 s
Stufe II für 60 s mit Formulierung Nr. 4 (5 µm Trockenfilmstärke)
Stufe III für 15 s
Stufe II für 60 s mit Formulierung Nr. 11 (5 µm Trockenfilmstärke)
Stufe III für 15 s

Trocknen und Verfilmen der Beschichtung bei 170 °C für 10 Minuten. Es wird eine durch die Pigmentzusätze optisch klar unterscheidbare, fünfschichtige Beschichtung unter Verwendung der drei beispielhaft eingesetzen Bindemittel in den unterschiedlichen Schichten erhalten.

### Beispiel 2

Stufe I
Stufe II für 180 s mit Formulierung Nr. 15 (20 µm Trockenfilmstärke)
Stufe III für 15 s
Stufe II für 60 s mit Formulierung Nr. 7 (20 µm Trockenfilmstärke)
Stufe III für 15 s
Stufe 11 für 80 s mit Formulierung Nr. 16 (20 µm Trockenfilmstärke)
Stufe III für 15 s

Trocknen und Verfilmen der Beschichtung bei 170 °C für 10 Minuten. Es wird eine durch die Pigmentzusätze optisch klar unterscheidbare, dreischichtige Beschichtung erhalten.

### Beispiel 3

Stufe I
Stufe II für 180 s mit Formulierung Nr. 3 (20 µm Trockenfilmstärke)
Stufe III für 15 s
Stufe II für 60 s mit Formulierung Nr. 11 (20 µm Trockenfilmstärke)
Stufe III für 15 s
Stufe II für 80 s mit Formulierung Nr. 3 (20 µm Trockenfilmstärke)
Stufe III für 15 s

Trocknen und Verfilmen der Beschichtung bei 170 °C für 10 Minuten. Es wird eine durch die Pigmentzusätze optisch klar unterscheidbare, dreischichtige Beschichtung von etwa 60 µm erhalten.

## Patentansprüche

1. Verfahren zum Beschichten von metallischen Oberflächen von Substraten mit wässerigen Zusammensetzungen in Form einer Dispersion und/oder Suspension, die mindestens ein stabilisiertes Bindemittel und einen Gelbildner enthalten und mit den in einer Vorbehandlungsstufe und/oder während der Kontaktierung aus der metallischen Oberfläche herausgelöste Kationen eine Beschichtung auf Basis eines ionogenen Gels bildet, bei dem die Beschichtung erfolgt durch:
I. Bereitstellen eines Substrats mit einer gereinigten, metallischen Oberfläche,
II. Kontaktieren und Beschichten metallischen Oberflächen mit einer ersten wässerigen Zusammensetzung in Form Dispersion und/oder Suspension,
III. gegebenenfalls Spülen der organischen Beschichtung,
IV. gegebenenfalls Trocknen der organischen Beschichtung und
V. Beschichten mit mindestens zwei weiteren Beschichtungszusammensetzungen vor dem Trocknen und Vernetzen aller aufgebrachten Schichten, wobei die stabilisierten Bindemittel die Bedingung erfüllen müssen, dass
a) ein wässriges Gemisch aus vollentsalztem Wasser, 0,2 bis 2 Gew.-% des Gelbildners und 5 bis 20 Gew.-% des stabilisierten Bindemittels;
b) auf einen pH-Wert von 1 bis 7 eingestellt;
c) ein gereinigtes Substrat in das Gemisch gemäß b) für mindestens 1 Minuten bei Raumtemperatur getaucht und
d) geprüft wird, ob eine Abscheidung einer organischen Beschichtung von mindestens 1 µm erfolgt ist, wobei
e) eine zusätzlich eine Prüfung ohne Gelbildner durchgeführt wird, in dem man ein Gemisch aus vollentsalztem Wasser und 5 bis 20 Gew.-% der zu untersuchenden Dispersion herstellt;
f) das unter e) hergestellte Gemisch gleichfalls auf einen pH-Wert von 1 bis 7 eingestellt und
g) die unter c) und d) beschriebene Prüfung wiederholt.

2. Verfahren nach Anspruch 1, **dadurch gekennzeichnet, dass** wobei die stabilisierten Bindemittel die Bedingung erfüllen müssen, dass
a) ein wässriges Gemisch aus vollentsalztem Wasser, 0,3 bis 1 Gew.-% des Gelbildners und 7 bis 15 Gew.-% des stabilisierten Bindemittels;
b) mit Hilfe einer Mineralsäure auf einen pH-Wert von 1,5 bis 5 eingestellt;
c) ein gereinigtes Substrat für 2 bis 15 Minuten bei Raumtemperatur in das Gemisch gemäß b) getaucht und
d) geprüft wird, ob eine Abscheidung einer organischen Beschichtung von mindestens 2 µm erfolgt ist, wobei
e) eine zusätzlich eine Prüfung ohne Gelbildner durchgeführt wird, in dem man ein Gemisch aus vollentsalztem Wasser und 7 bis 15 Gew.-% der zu untersuchenden Dispersion herstellt;
f) das unter e) hergestellte Gemisch gleichfalls mittels Mineralsäure auf einen pH-Wert von 1,5 bis 5 eingestellt und
g) die unter c) und d) beschriebene Prüfung wiederholt.

3. Verfahren nach Anspruch 1 oder 2, **dadurch gekennzeichnet, dass** die stabilisierten Bindemittel ausgewählt sind aus der Gruppe bestehend aus: nichtionisch stabilisierten Polyepoxy-Dispersionen, nichtionisch stabilisierten Polyurethan-Dispersionen und ionisch stabilisierte Polyacrylat-Dispersionen.

4. Verfahren nach Anspruch 1 bis 3, **dadurch gekennzeichnet, dass** die wässerigen Zusammensetzungen eine stabilisierte Dispersion mit einem Feststoffgehalt von 20 bis 90 Gew.-%, einer Viskosität von 100 bis 5000 mPas, eine Dichte von 1,0 bis 1,2 g/cm³ und einen pH-Wert im Bereich von 0,5 bis 10 in einer Menge von 0,01 bis 80,0 Gew.-% bezogen auf die gesamte Masse des resultierenden Gemisches sowie mindestens einem Gelbildner in einer Menge von 0,001 bis 20,0 Gew.-% bezogen auf die gesamte Masse des resultierenden Gemisches enthalten.

5. Verfahren nach Anspruch 1 bis 4, **dadurch gekennzeichnet, dass** die wässerigen Zusammensetzungen weiterhin einen oder mehrere Vertreter ausgewählt aus den nachfolgenden Gruppen:
a) einen Vernetzer ausgewählt aus der Gruppe besteht aus Silanen, Siloxanen, Phenolharztypen oder Aminen in einer Menge von 0,01 g/L bis 50 g/L,
b) komplexe Titan- und /oder Zirkonfluoride in einer Menge von 0,01 g/L bis 50 g/L,
c) einen Gehalt an mindestens einem Entschäumer und
d) mindestens ein Additiv ausgewählt aus der Gruppe bestehend aus Pigmenten, Bioziden, Dispergierhilfsmitteln, Filmbildungshilfmitteln, saure oder/und basische Hilfsmittel zum Einstellen des pH-Werts und Verdicker und Verlaufsmittel enthalten.

6. Verfahren nach Anspruch 1 bis 5, **dadurch gekennzeichnet, dass** der Gelbildner ausgewählt ist aus der Gruppe bestend aus: a) mindestens ein Polysaccharid auf Basis von Glykogenen, Amylosen, Amylopektinen, Callosen, Agar, Alginen, Alginaten, Pektinen, Carrageenen, Cellulosen, Chitinen, Chitosanen, Curdlanen, Dextranen, Fruktanen, Kollagenen, Gellan Gum, Gummi Arabicum, Stärken, Xanthanen, Traganth, Karayanen, Tarakernmehlen und Glucomannanen; b) mindestens ein anionischen Polyelektrolyten natürlichen Ursprungs auf Basis von Polyaminosäuren, Kollagenen, Polypeptiden, Ligninen oder c) mindestens einen synthetischen anionischen Polyelektrolyten auf Basis von Polyaminosäuren, Polyacrylsäuren, Polyacrylsäuren-Copolymere, Acrylamid-Copolymere, Ligninen, Polyvinylsulfonsäure, Polycarbonsäuren, Polyphosphorsäuren oder Polystyrolen.

7. Verfahren nach einem oder mehreren der vorherigen Ansprüche, **dadurch gekennzeichnet, dass** die wässerigen Zusammensetzungen und die hieraus hergestellten organischen Beschichtungen mindestens ein anionisches Polysaccharid ausgewählt aus solchen mit einem Veresterungsgrad der Carboxyfunktion im Bereich von 5 bis 75 % bezogen auf die Gesamtzahl der Alkohol- und Carboxygruppen enthalten.

8. Verfahren nach einem oder mehreren der vorherigen Ansprüche, **dadurch gekennzeichnet, dass** die wässerigen Zusammensetzungen und die hieraus hergestellten organischen Beschichtungen mindestens ein anionisches Polysaccharid und/oder mindestens einen anionischen Polyelektrolyten ausgewählt aus solchen mit einem Molekulargewicht im Bereich von 500 bis 1000000 g/mol⁻¹ enthalten.

9. Verfahren nach einem oder mehreren der vorherigen Ansprüche, **dadurch gekennzeichnet, dass** die wässerigen Zusammensetzungen und die hieraus hergestellten organischen Beschichtungen mindestens ein anionisches Polysaccharid oder mindestens einen anionischen Polyelektrolyten ausgewählt aus solchen mit einem Amidierungsgrad der Carboxyfunktionen im Bereich von 1 bis 50 % oder einem Epoxidierungsgrad der Carboxyfunktionen von bis zu 80 % enthalten.

10. Verfahren nach einem oder mehreren der vorherigen Ansprüche, **dadurch gekennzeichnet**, **dadurch gekennzeichnet, dass** die anionischen Polyelektrolyte modifiziert sind mit Haftgruppen ausgewählt aus der Gruppe bestehend aus chemischen Gruppen von multifunktionalen Epoxiden, Isocyanaten, primären Aminen, sekundären Aminen, tertiären Aminen, quartären Aminen, Amiden, Imiden, Imidazolen, Formamiden, Michael-Reaktionsprodukten, Carbodiimiden, Carbenen, cyclischen Carbenen, Cyclocarbonaten, multifunktionalen Carbonsäuren, Aminosäuren, Nukleinsäuren, Methacrylamiden, Polyacrylsäuren, Polyacrylsäurederivaten, Polyvinylalkoholen, Polyphenolen, Polyolen mit mindestens einem Alkyl- und/oder Arylrest, Caprolactam, Phosphorsäuren, Phosphorsäureestern, Epoxidestern, Sulfonsäuren, Sulfonsäureestern, Vinylsulfonsäuren, Vinylphosphonsäuren, Katechol, Silanen sowie den hieraus gebildeten Silanolen und/oder Siloxanen, Triazinen, Thiazolen, Thiazinen, Dithiazinen, Acetalen, Halbacetalen, Chinonen, gesättigten Fettsäuren, ungesättigten Fettsäuren, Alkyden, Estern, Polyestern, Ethern, Glykolen, cyclischen Ethern, Kronenethern, Anhydriden, sowie von Acetylacetonen und von beta-Diketo-Gruppen, Carbonylgruppen und Hydroxy-Gruppen.

11. Verfahren nach einem oder mehreren der vorherigen Ansprüche, **dadurch gekennzeichnet, dass** die wässerigen Zusammensetzungen und die hieraus hergestellten organischen Beschichtungen einen Gehalt an mindestens einem Komplexbildner für Metallkationen oder einem Polymer, welches Metallkationen komplexierend modifiziert ist, aufweisen.

12. Verfahren nach Anspruch 11, **dadurch gekennzeichnet, dass** die wässerigen Zusammensetzungen und die hieraus hergestellten organischen Beschichtungen einen Gehalt an mindestens einem Komplexbildner ausgewählt aus solchen auf Basis von Maleinsäure, Alendronsäure, Itaconsäure, Citraconsäure oder Mesaconsäure oder die Anhydride oder Halbester dieser Carbonsäuren aufweisen.

13. Verfahren nach einem oder mehreren der vorherigen Ansprüche, **dadurch gekennzeichnet, dass** die wässerigen Zusammensetzungen und die hieraus hergestellten organischen Beschichtungen mindestens eine Art von Kationen enthalten, ausgewählt aus solchen auf Basis von kationisch wirkenden Salzen ausgewählt aus der Gruppe bestehend aus Melaminsalzen, Nitrososalzen, Oxoniumsalzen, Ammoniumsalzen, Salzen mit quaternären Stickstoffkationen, Salzen von Ammoniumderivaten und Metallsalzen von Ag, Al, Ba, Ca, Co, Cu, Fe, In, Mg, Mn, Mo, Ni, Pb, Sn, Ta, Ti, V, W, Zn oder/und Zr.

14. Verfahren nach Anspruch 1, **dadurch gekennzeichnet, dass** die wässerigen Zusammensetzungen komplexe Titan- und /oder Zirkonfluoride in einer Menge von 0,1 g/L bis 30 g/L enthalten.

15. Verfahren nach einem oder mehreren der vorherigen Ansprüche, **dadurch gekennzeichnet, dass** vor dem Kontaktieren und Beschichten der metallischen Oberflächen mit einer wässerigen Zusammensetzung in Verfahrensstufe II. die metallischen Oberflächen gereinigt, gebeizt oder vorbehandelt werden.

16. Verfahren nach einem oder mehreren der vorherigen Ansprüche, **dadurch gekennzeichnet, dass** jede der wässerigen Zusammensetzungen eine Beschichtung auf Basis eines ionogenen Gels ausbildet, wobei die Schichtstärke aller abgeschiedenen Beschichtungen nach dem Trocknen und Vernetzen aller aufgebrachten Schichten im Bereich von 3 bis 500 µm, vorzugsweise von 5 bis 300 µm und besonders bevorzugt 8 bis 100 µm liegt und 2 bis 10, vorzugweise 3 bis 5 Schichten abgeschieden werden.

17. Verfahren nach einem oder mehreren der vorherigen Ansprüche, **dadurch gekennzeichnet, dass** die einzelnen organischen Beschichtungen in 0,05 bis 20 Minuten im Tauchbad ausgebildet werden und nach dem Trocknen jeweils eine Trockenfilmdicke im Bereich von 1 bis 100 µm, vorzugsweise von 3 bis 60 µm und besonders bevorzugt 5 bis 30 µm aufweisen.

## Claims

1. A process for coating metallic surfaces of substrates with aqueous compositions in the form of a dispersion and/or suspension, which comprise at least one stabilized binder and a gel former and with the cations dissolved out from the metallic surface in a pretreatment stage and/or during contacting forms a coating based on an ionogenic gel, wherein coating is carried out by:
I. provision of a substrate having a cleaned, metallic surface,
II. contacting and coating of metallic surfaces with a first aqueous composition in the form of a dispersion and/or suspension,
III. optionally rinsing of the organic coating,
IV. optionally drying of the organic coating and
V. coating with at least two further coating compositions before drying and crosslinking of all applied layers, where the stabilized binders have to satisfy the condition that
a) an aqueous mixture of deionized water, from 0.2 to 2% by weight of a gel former and from 5 to 20% by weight of the stabilized binder
b) is brought to a pH of from 1 to 7;
c) a clean substrate is dipped into the mixture as per b) for at least 1 minute at room temperature and
d) a check is made as to whether deposition of an organic coating having a thickness of at least 1 µm has occurred, where
e) an additional test without gel former, in which a mixture of deionized water and from 5 to 20% by weight of the dispersion to be examined is produced, is carried out;
f) the mixture produced under e) is likewise brought to a pH of from 1 to 7 and
g) the test described under c) and d) is repeated.

2. The process according to claim 1, wherein the stabilized binders have to satisfy the condition that
a) an aqueous mixture of deionized water, from 0.3 to 1% by weight of a gel former and from 7 to 15% by weight of the stabilized binder
b) is brought to a pH of from 1.5 to 5 by means of a mineral acid;
c) a clean substrate is dipped into the mixture as per b) for from 2 to 15 minutes at room temperature and
d) a check is made as to whether deposition of an organic coating having a thickness of at least 2 µm has occurred, where
e) an additional test without gel former, in which a mixture of deionized water and from 7 to 15% by weight of the dispersion to be examined is produced, is carried out;
f) the mixture produced under e) is likewise brought to a pH of from 1.5 to 5 by means of mineral acid and
g) the test described under c) and d) is repeated.

3. The process according to claim 1 or 2, wherein the stabilized binders are selected from the group consisting of: nonionically stabilized polyepoxy dispersions, nonionically stabilized polyurethane dispersions and ionically stabilized polyacrylate dispersions.

4. The process according to any of claims 1 to 3, wherein the aqueous compositions comprise a stabilized dispersion having a solids content of from 20 to 90% by weight, a viscosity of from 100 to 5000 mPas, a density of from 1.0 to 1.2 g/cm³ and a pH in the range from 0.5 to 10 in an amount of from 0.01 to 80.0% by weight, based on the total mass of the resulting mixture, and also at least one gel former in an amount of from 0.001 to 20.0% by weight, based on the total mass of the resulting mixture.

5. The process according to any of claims 1 to 4, wherein the aqueous compositions further comprise one or more representatives selected from the following groups:
a) a crosslinker selected from the group consisting of silanes, siloxanes, phenolic resin types or amines in an amount of from 0.01 g/l to 50 g/l,
b) complex titanium and/or zirconium fluorides in an amount of from 0.01 g/l to 50 g/l,
c) a content of at least one antifoam and
d) at least one additive selected from the group consisting of pigments, biocides, dispersants, film formers, acidic or/and basic auxiliaries for setting the pH and thickeners and levelling agents.

6. The process according to any of claims 1 to 5, wherein the gel former is selected from the group consisting of: a) at least one polysaccharide based on glycogens, amyloses, amylopectins, calloses, agar, algins, alginates, pectins, carrageenans, celluloses, chitins, chitosans, curdlans, dextrans, fructans, collagens, gellan gum, gum arabic, starches, xanthans, traganth, karayans, tara gum and glucomannans; b) at least one anionic polyelectrolyte of natural origin based on polyamino acids, collagens, polypeptides, lignins or c) at least one synthetic and anionic polyelectrolyte based on polyamino acids, polyacrylic acids, polyacrylic acid copolymers, acrylamide copolymers, lignins, polyvinylsulfonic acid, polycarboxylic acids, polyphosphoric acids or polystyrenes.

7. The process according to one or more of the preceding claims, wherein the aqueous compositions and the organic coatings produced therefrom comprise at least one anionic polysaccharide selected from polysaccharides having a degree of esterification of the carboxy function in the range from 5 to 75%, based on the total number of the alcohol and carboxy groups.

8. The process according to one or more of the preceding claims, wherein the aqueous compositions and the organic coatings produced therefrom comprise at least one anionic polysaccharide and/or at least one anionic polyelectrolyte selected from among those having a molecular weight in the range from 500 to 1 000 000 g/mol.

9. The process according to one or more of the preceding claims, wherein the aqueous compositions and the organic coatings produced therefrom comprise at least one anionic polysaccharide and at least one anionic polyelectrolyte selected from among those having a degree of amidation of the carboxy functions in the range from 1 to 50% or a degree of epoxidation of carboxy functions of up to 80%.

10. The process according to one or more of the preceding claims, wherein the anionic polyelectrolytes have been modified with functional groups capable of adsorption selected from the group consisting of chemical groups of polyfunctional epoxides, isocyanates, primary amines, secondary amines, tertiary amines, quaternary amines, amides, imides, imidazoles, formamides, Michael reaction products, carbodiimides, carbenes, cyclic carbenes, cyclocarbonates, polyfunctional carboxylic acids, amino acids, nucleic acids, methacrylamides, polyacrylic acids, polyacrylic acid derivatives, polyvinyl alcohols, polyphenols, polyols having at least one alkyl and/or aryl radical, caprolactam, phosphoric acids, phosphoric esters, epoxide esters, sulfonic acids, sulfonic esters, vinylsulfonic acids, vinylphosphonic acids, catechol, silanes and also the silanols and/or siloxanes formed therefrom, triazines, thiazoles, thiazines, dithiazines, acetals, hemiacetals, quinones, saturated fatty acids, unsaturated fatty acids, alkyds, esters, polyesters, ethers, glycols, cyclic ethers, crown ethers, anhydrides, and also of acetylacetones and of beta-diketo groups, carbonyl groups and hydroxy groups.

11. The process according to one or more of the preceding claims, wherein the aqueous compositions and the organic coatings produced therefrom have a content of at least one complexing agent for metal cations or a polymer which has been modified so as to be able to complex metal cations.

12. The process according to claim 11, wherein the aqueous compositions and the organic coatings produced therefrom have a content of at least one complexing agent selected from among those based on maleic acid, alendronic acid, itaconic acid, citraconic acid or mesaconic acid or the anhydrides or monoesters of these carboxylic acids.

13. The process according to one or more of the preceding claims, wherein the aqueous compositions and the organic coatings produced therefrom comprise at least one type of cations selected from among those based on cationically acting salts selected from the group consisting of melamine salts, nitroso salts, oxonium salts, ammonium salts, salts having quaternary nitrogen cations, salts of ammonium derivatives and metal salts of Ag, Al, Ba, Ca, Co, Cu, Fe, In, Mg, Mn, Mo, Ni, Pb, Sn, Ta, Ti, V, W, Zn or/and Zr.

14. The process according to claim 1, wherein the aqueous compositions comprise complex titanium and/or zirconium fluorides in an amount of from 0.1 g/l to 30 g/l.

15. The process according to one or more of the preceding claims, wherein the metallic surfaces are cleaned, pickled or pretreated before contacting and coating of the metallic surfaces with an aqueous composition in process step II.

16. The process according to one or more of the preceding claims, wherein each of the aqueous compositions forms a coating based on an ionogenic gel, where the layer thickness of all deposited coatings after drying and crosslinking of all applied layers is in the range from 3 to 500 µm, preferably from 5 to 300 µm and particularly preferably from 8 to 100 µm and from 2 to 10, preferably from 3 to 5, layers are deposited.

17. The process according to one or more of the preceding claims, wherein the individual organic coatings are formed in from 0.05 to 20 minutes in the dipping bath and after drying each have a dry film thickness in the range from 1 to 100 µm, preferably from 3 to 60 µm and particularly preferably from 5 to 30 µm.

## Revendications

1. Procédé de revêtement de surfaces métalliques de substrats avec des compositions aqueuses sous la forme d'une dispersion et/ou d'une suspension, qui contiennent au moins un liant stabilisé et un gélifiant, et avec lesquelles, lors d'une étape de prétraitement et/ou pendant la mise en contact avec des cations extraits de la surface métallique, un revêtement à base d'un gel ionogène se forme, selon lequel le revêtement a lieu par :
I. la préparation d'un substrat ayant une surface métallique nettoyée,
II. la mise en contact et le revêtement de surfaces métalliques avec une première composition aqueuse sous la forme d'une dispersion et/ou d'une suspension,
III. éventuellement le rinçage du revêtement organique,
IV. éventuellement le séchage du revêtement organique, et
V. le revêtement avec au moins deux compositions de revêtement supplémentaires avant le séchage et la réticulation de toutes les couches appliquées, les liants stabilisés devant satisfaire la condition selon laquelle :
a) un mélange aqueux d'eau entièrement dessalée, 0,2 à 2 % en poids du gélifiant et 5 à 20 % en poids du liant stabilisé ;
b) est ajusté à un pH de 1 à 7 ;
c) un substrat nettoyé est immergé dans le mélange selon b) pendant au moins 1 minute à température ambiante, et
d) on évalue si un dépôt d'un revêtement organique d'au moins 1 µm a lieu,
e) une évaluation supplémentaire étant réalisée sans gélifiant en fabriquant un mélange d'eau entièrement dessalée et de 5 à 20 % en poids de la dispersion à étudier ;
f) le mélange fabriqué en e) étant également ajusté à un pH de 1 à 7 ; et
g) l'évaluation décrite en c) et d) étant répétée.

2. Procédé selon la revendication 1, **caractérisé en ce que** les liants stabilisés doivent satisfaire la condition selon laquelle :
a) un mélange aqueux d'eau entièrement dessalée, 0,3 à 1 % en poids du gélifiant et 7 à 15 % en poids du liant stabilisé ;
b) est ajusté à un pH de 1,5 à 5 à l'aide d'un acide minéral ;
c) un substrat nettoyé est immergé dans le mélange selon b) pendant 2 à 15 minutes à température ambiante, et
d) on évalue si un dépôt d'un revêtement organique d'au moins 2 µm a lieu,
e) une évaluation supplémentaire étant réalisée sans gélifiant en fabriquant un mélange d'eau entièrement dessalée et de 7 à 15 % en poids de la dispersion à étudier ;
f) le mélange fabriqué en e) étant également ajusté à un pH de 1,5 à 5 au moyen d'un acide minéral ; et
g) l'évaluation décrite en c) et d) étant répétée.

3. Procédé selon la revendication 1 ou 2, **caractérisé en ce que** les liants stabilisés sont choisis dans le groupe constitué par : les dispersions de polyépoxy stabilisées de manière non ionique, les dispersions de polyuréthane stabilisées de manière non ionique et les dispersions de polyacrylate stabilisées de manière ionique.

4. Procédé selon les revendications 1 à 3, **caractérisé en ce que** les compositions aqueuses contiennent une dispersion stabilisée ayant une teneur en solides de 20 à 90 % en poids, une viscosité de 100 à 5 000 mPas, une densité de 1,0 à 1,2 g/cm³ et un pH dans la plage allant de 0,5 à 10, en une quantité de 0,01 à 80,0 % en poids, par rapport à la masse totale du mélange résultant, ainsi qu'au moins un gélifiant en une quantité de 0,001 à 20,0 % en poids, par rapport à la masse totale du mélange résultant.

5. Procédé selon les revendications 1 à 4, **caractérisé en ce que** les compositions aqueuses contiennent en outre un ou plusieurs éléments choisis dans les groupes suivants :
a) un agent de réticulation choisi dans le groupe constitué par les silanes, les siloxanes, les types de résines phénoliques ou les amines en une quantité de 0,01 g/l à 50 g/l,
b) les fluorures de titane et/ou de zirconium complexes en une quantité de 0,01 g/l à 50 g/l,
c) une teneur en au moins un antimousse et
d) au moins un additif choisi dans le groupe constitué par les pigments, les biocides, les adjuvants de dispersion, les adjuvants filmogènes, les adjuvants acides et/ou basiques pour l'ajustement du pH et les épaississants et les agents de nivellement.

6. Procédé selon les revendications 1 à 5, **caractérisé en ce que** le gélifiant est choisi dans le groupe constitué par : a) au moins un polysaccharide à base de glycogènes, d'amyloses, d'amylopectines, de calloses, d'agar-agar, d'algines, d'alginates, de pectines, de carraghénanes, de celluloses, de chitines, de chitosans, de curdlanes, de dextranes, de fructanes, de collagènes, de gomme gellane, de gomme arabique, d'amidons, de xanthanes, de gomme adragante, de gommes karaya, de gommes tara et de glucomannanes ; b) au moins un polyélectrolyte anionique d'origine naturelle à base d'acides polyaminés, de collagènes, de polypeptides, de lignines ; ou c) au moins un polyélectrolyte anionique synthétique à base d'acides polyaminés, d'acides polyacryliques, de copolymères d'acides polyacryliques, de copolymères d'acrylamide, de lignines, d'acide polyvinylsulfonique, d'acides polycarboxyliques, d'acides polyphosphoriques ou de polystyrènes.

7. Procédé selon une ou plusieurs des revendications précédentes, **caractérisé en ce que** les compositions aqueuses et les revêtements organiques fabriqués à partir de celles-ci contiennent au moins un polysaccharide anionique choisi parmi ceux ayant un degré d'estérification de la fonction carboxy dans la plage allant de 5 à 75 %, par rapport au nombre total de groupes alcool et carboxy.

8. Procédé selon une ou plusieurs des revendications précédentes, **caractérisé en ce que** les compositions aqueuses et les revêtements organiques fabriqués à partir de celles-ci contiennent au moins un polysaccharide anionique et/ou au moins un polyélectrolyte anionique choisi parmi ceux ayant un poids moléculaire dans la plage allant de 500 à 1 000 000 g/mol⁻¹.

9. Procédé selon une ou plusieurs des revendications précédentes, **caractérisé en ce que** les compositions aqueuses et les revêtements organiques fabriqués à partir de celles-ci contiennent au moins un polysaccharide anionique ou au moins un polyélectrolyte anionique choisi parmi ceux ayant un degré d'amidation des fonctions carboxy dans la plage allant de 1 à 50 % ou un degré d'époxydation des fonctions carboxy de jusqu'à 80 %.

10. Procédé selon une ou plusieurs des revendications précédentes, **caractérisé en ce que** les polyélectrolytes anioniques sont modifiés avec des groupes adhésifs choisis dans le groupe constitué par les groupes chimiques d'époxydes multifonctionnels, d'isocyanates, d'amines primaires, d'amines secondaires, d'amines tertiaires, d'amines quaternaires, d'amides, d'imides, d'imidazoles, de formamides, de produits de réaction de Michael, de carbodiimides, de carbènes, de carbènes cycliques, de cyclocarbonates, d'acides carboxyliques multifonctionnels, d'acides aminés, d'acides nucléiques, de méthacrylamides, d'acides polyacryliques, de dérivés d'acides polyacryliques, d'alcools polyvinyliques, de polyphénols, de polyols contenant au moins un radical alkyle et/ou aryle, de caprolactame, d'acides phosphoriques, d'esters d'acides phosphoriques, d'esters d'époxydes, d'acides sulfoniques, d'esters d'acides sulfoniques, d'acides vinylsulfoniques, d'acides vinylphosphoniques, de catéchol, de silanes, ainsi que des silanols et/ou des siloxanes formés à partir de ceux-ci, de triazines, de thiazoles, de thiazines, de dithiazines, d'acétals, de semi-acétals, de quinones, d'acides gras saturés, d'acides gras insaturés, d'alkydes, d'esters, de polyesters, d'éthers, de glycols, d'éthers cycliques, d'éthers couronnes, d'anhydrides, ainsi que d'acétylacétones et de groupes bêta-dicéto, de groupes carbonyle et de groupes hydroxy.

11. Procédé selon une ou plusieurs des revendications précédentes, **caractérisé en ce que** les compositions aqueuses et les revêtements organiques fabriqués à partir de celles-ci présentent une teneur en au moins un complexant pour cations métalliques ou un polymère, qui est modifié pour complexer les cations métalliques.

12. Procédé selon la revendication 11, **caractérisé en ce que** les compositions aqueuses et les revêtements organiques fabriqués à partir de celles-ci présentent une teneur en au moins un complexant choisi parmi ceux à base d'acide maléique, d'acide alendronique, d'acide itaconique, d'acide citraconique ou d'acide mésaconique ou les anhydrides ou semi-esters de ces acides carboxyliques.

13. Procédé selon une ou plusieurs des revendications précédentes, **caractérisé en ce que** les compositions aqueuses et les revêtements organiques fabriqués à partir de celles-ci contiennent au moins un type de cations, choisi parmi ceux à base de sels à effet cationique, choisis dans le groupe constitué par les sels de mélamine, les sels nitroso, les sels d'oxonium, les sels d'ammonium, les sels avec des cations d'azote quaternaire, les sels de dérivés d'ammonium et les sels métalliques d'Ag, Al, Ba, Ca, Co, Cu, Fe, In, Mg, Mn, Mo, Ni, Pb, Sn, Ta, Ti, V, W, Zn et/ou Zr.

14. Procédé selon la revendication 1, **caractérisé en ce que** les compositions aqueuses contiennent des fluorures de titane et/ou de zirconium complexes en une quantité de 0,1 g/l à 30 g/l.

15. Procédé selon une ou plusieurs des revendications précédentes, **caractérisé en ce qu'**avant la mise en contact et le revêtement des surfaces métalliques avec une composition aqueuse à l'étape de procédé II., les surfaces métalliques sont nettoyées, décapées ou prétraitées.

16. Procédé selon une ou plusieurs des revendications précédentes, **caractérisé en ce que** chacune des compositions aqueuses forme un revêtement à base d'un gel ionogène, l'épaisseur de couche de tous les revêtements déposés après le séchage et la réticulation de toutes les couches appliquées se situant dans la plage allant de 3 à 500 µm, de préférence de 5 à 300 µm et de manière particulièrement préférée de 8 à 100 µm, et 2 à 10, de préférence 3 à 5 couches étant déposées.

17. Procédé selon une ou plusieurs des revendications précédentes, **caractérisé en ce que** les revêtements organiques individuels sont formés en 0,05 à 20 minutes dans le bain d'immersion, et présentent chacun après le séchage une épaisseur de film sec dans la plage allant de 1 à 100 µm, de préférence de 3 à 60 µm et de manière particulièrement préférée de 5 à 30 µm.
